# EUROPÄISCHE PATENTSCHRIFT

(11) **EP 3 294 965 B1**
(45) Veröffentlichungstag und Bekanntmachung des Hinweises auf die Patenterteilung: **30.09.2020**
(21) Anmeldenummer: 16725390.5
(22) Anmeldetag: 11.05.2016
(51) Int. Cl.: E04B 2/74, B29C 44/00, B29C 44/32, B29C 44/58, B29C 44/56, B29C 44/20, E04B 1/68, E04B 1/94, B29K 623/00, B29K 627/06, B29K 75/00, B29K 675/00

(54) **VERFAHREN UND VORRICHTUNG ZUR HERSTELLUNG EINES PROFILELEMENTS**
METHOD AND DEVICE FOR PRODUCING A PROFILED ELEMENT
PROCÉDÉ ET DISPOSITIF DE FABRICATION D'UN ÉLÉMENT PROFILÉ

(30) Priorität: 11.05.2015 EP 15167086
(43) Veröffentlichungstag der Anmeldung: 21.03.2018
(73) Patentinhaber: Hilti Aktiengesellschaft, 9494 Schaan (LI)
(72) Erfinder: WEILING, Markus, 86899 Landsberg am Lech (DE); OBER, Andreas, 86916 Kaufering (DE)
(74) Vertreter: Hilti Aktiengesellschaft Corporate Intellectual Property
(86) Internationale Anmeldenummer: PCT/EP2016/060496
(87) Internationale Veröffentlichungsnummer: WO 2016/180850

(56) Entgegenhaltungen:
- DE-B- 1 260 124
- US-A1- 2009 107 623

## Beschreibung

### GEBIET DER ERFINDUNG

Die vorliegende Erfindung betrifft ein Verfahren zur Herstellung eines Profilelements zum Abdichten von Bauwerksfugen, insbesondere zur Abdichtung gegen Schall und Rauch und gegebenenfalls gegen Feuer, sowie eine Vorrichtung zur Herstellung eines solchen Profilelements.

Insbesondere betrifft die Erfindung ein verbessertes Verfahren zur kontinuierlichen und endlosen Herstellung eines solchen Profilelements.

### HINTERGRUND DER ERFINDUNG

Anschlussfugen entstehen in der Regel, wenn unterschiedliche Bauteile aufeinander treffen. Anschlussfugen befinden sich im Anschlussbereich zur Geschossdecke, zum Fußboden und zu Massivwänden. Durch Gewichtsbelastung oder thermische Einflüsse kann es bei Gebäuden zu einem Senken oder Heben der Decke kommen. Um Beschädigungen der Trockenbauwand zu vermeiden, wird in diesem Fall die obere Anschlussfuge als Bewegungsfuge ausgeführt. Als Bewegungsfugen werden daher Fugen zur Unterbrechung von Bauteilen bezeichnet, um Spannungsrissen vorzubeugen. Das Deckenprofil wird derart ausgeführt, dass eine Relativbewegung zwischen Deckenprofil und den senkrechten Wandkomponenten möglich ist.

Im Allgemeinen wird auf die Anschlussbauteile ein U-Profil befestigt, welches Teil des Ständerwerkes ist. Die Gipskartonplatten selber werden mit einem definierten Abstand zum Anschlussbauteil angebracht. Üblicherweise erfolgt die Abdichtung des Systems im Spalt zwischen Gipskartonplatte und Decke. Hierzu wird entweder eine geeignete Dichtmasse eingebracht, mit Fugenspray gearbeitet oder aber der Spalt mit einer Fugenschnur versehen oder mit Mineralwolle gefüllt und an der Oberfläche mit einer abdichtenden Schicht versehen. In diesen Fällen behindert das in der Fuge befindliche Material die Bewegung relativ stark, mit der Konsequenz, dass zur Erzielung einer ausreichenden Bewegungsaufnahme mit verhältnismäßig großen Fugenbreiten gearbeitet werden muss.

Unterschiedliche Verfahren zur Herstellung von Profilelementen, wie Profilsträngen und Fugenschnüren, zum Abdichten von Bauwerksfugen, insbesondere Anschlussfugen, gegen Schall und Rauch sind aus dem Stand der Technik bekannt.

DE 3038524 A1 beschreibt ein Dehnungsfugenband, das mit einem flexiblen Schlauch ausgerüstet ist, wobei das Dehnungsfugenband in eine Fuge zwischen den Betonelementen eingelassen wird. Der flexible Schlauch dient dazu, weiteres Fugenmaterial, wie Polyurethan, nachzufüllen, um die Fuge nachträglich abzudichten, was die Montage und Handhabung erschwert.

DE 4006997 A1 beschreibt ein Verfahren und eine Vorrichtung zum Herstellen von Profilsträngen aus Brandschutz-Schaumstoffen unter Verwendung eines in einem Mischer zubereiteten Reaktionsgemisches, das in einen geschlossenen, flexiblen und luftdichten Folienschlauch gefüllt wird, wobei der Folienschlauch vor Gebrauch des Profilstrangs entfernt wird.

DE 102010008570 A1 beschreibt ein Verfahren zur Herstellung einer Brandschutz-Fugenschnur, wobei ein intumeszierender Schaum in einen Schlauch strömt und aufgeschäumt wird. Nachteilig in DE 102010008570 A1 ist der vorbestimmte Durchmesser des Schlauches sowie möglich auftretender Rückstau der Materialmasse während des Herstellungsverfahrens oder ungenügend Materialmasse in der hergestellten Fugenschnur.

Die DE 1 260 124 B betrifft ein Verfahren zum Herstellen eines mit einer biegsamen Hülle versehenen langgestreckten Schaumkörpers oder eines Dichtungsbandes.

Die Systeme des Standes der Technik zeigen weitere zusätzliche Nachteile wie z. B. erheblicher Zeitaufwand bei der Herstellung durch aufwendige Reinigungsschritte der Anlage bzw. durch umständliches Rüsten, hohe Kosten, Aufbau der Fugenschnur bzw. des Profilelements aus mehreren Komponenten oder aufwendigen Konstruktionselementen, schlechte Schneidbarkeit, hohes Gewicht, oder sehr unangenehme Montage für Bauwerksfugen, insbesondere für Anschlussfugen. Aufgabe der Erfindung ist es daher, ein Verfahren zur Herstellung eines Profilelements zum Abdichten von Bauwerksfugen, insbesondere zur Abdichtung gegen Schall und Rauch und gegebenenfalls gegen Feuer, bereitzustellen, das die Nachteile der bekannten Verfahren vermeidet. Insbesondere ist es Aufgabe der vorliegenden Erfindung ein verbessertes Verfahren zur kontinuierlichen und endlosen Herstellung eines solchen Profilelements bereitzustellen.

Eine weitere Aufgabe der vorliegenden Erfindung ist es, eine Vorrichtung bereitzustellen, die die kostengünstige, ökonomische, kontinuierliche und endlose Herstellung eines Profilelements ermöglicht.

Diese und weitere Aufgaben, die aus der folgenden Beschreibung der Erfindung ersichtlich sind, werden durch die vorliegende Erfindung, wie sie in den unabhängigen Ansprüchen beschrieben ist, gelöst. Die abhängigen Ansprüche beziehen sich auf bevorzugte Ausführungsformen.

### ZUSAMMENFASSUNG DER ERFINDUNG

Die vorliegende Erfindung betrifft ein Verfahren zur Herstellung eines Profilelements zum Abdichten einer Bauwerksfuge, umfassend die Merkmale des Anspruchs 1.

Die vorliegende Erfindung betrifft ferner eine Vorrichtung zur Herstellung eines Profilelements, zum Abdichten einer Bauwerksfuge, mit einer Gießanlage zum Mischen und Aufbringen eines fließfähigen Reaktionsgemisches, gekennzeichnet durch
a) eine Zuführungsvorrichtung zur Zuführung der Folie,
b) eine Walze zur Perforation der Folie,
c) mindestens ein Fördermittel zur flachen Auflage und Beförderung der Folie,
d) eine Formschulter zur Formgebung des Profilelements,
e) eine thermische Schweißanlage zum Verbinden eines ersten Seitenkantenbereichs der Folie mit einem zweiten Seitenkantenbereich der Folie,
f) eine Reaktionsstrecke zum Aufschäumen des fließfähigen Reaktionsgemisches,
g) Fördertechnik zum exakten Führen der Folie,
h) eine Schneideeinheit zum Zuschneiden der gewünschten Länge des Profilelements, und
i) mindestens ein Metallprofil zur Formgebung der gewünschten Profilgeometrie.

Andere Aufgaben und Merkmale dieser Erfindung sind zum Teil offensichtlich und werden zum Teil im Folgenden erläutert. Insbesondere wird der Gegenstand der vorliegenden Erfindung im Detail durch Bezugnahme auf die folgenden Figuren beschrieben:

### KURZE BESCHREIBUNG DER FIGUREN

Figur 1 zeigt eine skizzierte Ausführungsform der erfindungsgemäßen Vorrichtung zur Herstellung eines Profilelements.
Figur 2a zeigt eine skizzierte Vorderansicht einer Ausführungsform eines erfindungsgemäß hergestellten Profilelements.
Figur 2b zeigt einen Querschnitt durch eine Ausführungsform eines erfindungsgemäß hergestellten Profilelements.
Figur 2c zeigt eine Perspektive einer Ausführungsform eines erfindungsgemäß hergestellten Profilelements.
Figur 3 zeigt die Anwendung einer Ausführungsform eines erfindungsgemäß hergestellten Profilelements für die akustische, rauchsichere und/oder brandsichere Abdichtung von Anschlussfugen bei Trockenbauwänden.

### AUSFÜHRLICHE BESCHREIBUNG DER ERFINDUNG

Die folgenden Begriffe werden im Rahmen der vorliegenden Erfindung verwendet:
Der Begriff "Profilgeometrie" im Rahmen der vorliegenden Erfindung umfasst verschiedene Querschnittsarten des Profilelements. Dies bedeutet, dass insbesondere die Dichtbereiche des Profilelements unterschiedliche Querschnittsarten aufweisen können. Unter Querschnittsarten werden u.a. Rundprofil (runder Querschnitt), Mehreckprofil (mehreckiger Querschnitt), insbesondere Quadratprofil (quadratischer Querschnitt), Rechteckprofil (rechteckiger Querschnitt), Parallelogrammprofil (Querschnitt in Form eines Parallelogramms), Dreieckprofil (dreieckiger Querschnitt), etc., verstanden.

Der Begriff "verformbar" im Rahmen der vorliegenden Erfindung bedeutet, dass Unebenheiten im Bauteil ausgeglichen werden können, gegen das das Profilelement gepresst wird. "Plastisch verformbar" bedeutet dabei, dass das Profilelement verformbar ist und nach der Verformung nicht wieder in seine ursprüngliche Form zurückkehrt. "Elastisch verformbar" bedeutet dabei, dass das Profilelement verformbar ist und nach der Verformung wieder in seine ursprüngliche Form zurückkehrt, d.h. dass das Material sich zu einem gewissen Grad reversibel verformen lässt.

Die Begriffe "aufweisen", "mit" und "haben" sollen einschließend sein und bedeuten, dass auch andere als die genannten Elemente gemeint sein können.

Der Begriff "Intumeszenz" im Rahmen der vorliegenden Erfindung bedeutet dabei, dass unter Einwirkung von Hitze, beispielsweise im Brandfall, sich das Material aufbläht und eine isolierende Schicht aus schwerentflammbarem Material bildet, also intumesziert.

Unter "langsam abbrennenden Schaumstoff" wird im Rahmen der vorliegenden Erfindung ein Schaumstoff verstanden, der keine Möglichkeit der Brandausbreitung durch den Schaumstoff bietet, nicht eigenentflammbar ist und auch nicht abtropft.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

In einem Aspekt betrifft die vorliegende Erfindung ein Verfahren zur Herstellung eines Profilelements zum Abdichten einer Bauwerksfuge, umfassend die folgenden Schritte:
a) Bereitstellen einer Folie mittels einer Zuführvorrichtung, die mindestens eine Rolle umfasst, worüber die Folie aus einem Folienvorrat einer rotierenden Walze zur Perforation zugeführt wird,
b) Aufbringen eines fließfähigen Reaktionsgemisches auf einer Oberseite der Folie,
c) Verbinden eines ersten Seitenkantenbereichs der Folie mit einem zweiten Seitenkantenbereich der Folie zum Erzeugen eines im Wesentlichen zylindrischen Profilelements mittels einer Schweißanlage,
d) Aufschäumen des fließfähigen Reaktionsgemisches durch Führung des entstandenen schlauchartigen Profilelements mittels Fördertechnik über eine Reaktionsstrecke,
e) Formgebung der gewünschten Profilgeometrie durch mindestens ein Metallprofil, wobei das Volumen des aufzubringenden fließfähigen Reaktionsgemisches so dosiert wird, dass es dem Innenvolumen des hergestellten Profilelements entspricht und wobei die Folie das Reaktionsgemisch vollständig umschließt.

In einem weiteren Aspekt betrifft die vorliegende Erfindung eine Vorrichtung zur Herstellung eines Profilelements, zum Abdichten einer Bauwerksfuge, mit einer Gießanlage zum Mischen und Aufbringen eines fließfähigen Reaktionsgemisches, gekennzeichnet durch
a) eine Zuführungsvorrichtung zur Zuführung der Folie,
b) eine Walze zur Perforation der Folie,
c) mindestens ein Fördermittel zur flachen Auflage und Beförderung der Folie,
d) eine Formschulter zur Formgebung des Profilelements,
e) eine thermische Schweißanlage zum Verbinden eines ersten Seitenkantenbereichs der Folie mit einem zweiten Seitenkantenbereich der Folie,
f) eine Reaktionsstrecke zum Aufschäumen des fließfähigen Reaktionsgemisches,
g) Fördertechnik zum exakten Führen der Folie,
h) eine Schneideeinheit zum Zuschneiden der gewünschten Länge des Profilelements, und
i) mindestens ein Metallprofil zur Formgebung der gewünschten Profilgeometrie.

Es wurde herausgefunden, dass das erfindungsgemäße Verfahren sich besonders dazu eignet, in einfacher, kontinuierlicher, ökonomischer und kostengünstiger Weise ein Profilelement herzustellen, um eine Bauwerksfuge zwischen zwei aneinandergrenzenden Bauteilen sicher abzudichten, insbesondere gegen Schall und/oder Rauch und gegebenenfalls auch gegen Feuer.

Daher ist es ein Ziel der vorliegenden Erfindung, das Verfahren zur Herstellung eines Profilelements zum Abdichten einer Bauwerksfuge zu beschreiben. Ferner ist es Ziel der vorliegenden Erfindung, die Vorrichtung zur Herstellung eines Profilelements, zum Abdichten einer Bauwerksfuge, detailliert zu beschreiben.

Ein solches Profilelement lässt sich erfindungsgemäß dadurch herstellen, dass ein geeignetes fließfähiges Reaktionsgemisch auf eine flache Folie aufgebracht wird, von der anschließend ein erster Seitenkantenbereich mit einem zweiten Seitenkantenbereich zum Erzeugen eines im Wesentlichen zylindrischen Profilelements verbunden wird, wobei dann das aufschäumende, verformbare Material zusammen mit der Folie eine Reaktionsstrecke durchläuft und zu einem Profilelement geformt wird.

Daher umfasst das erfindungsgemäße Verfahren zur Herstellung eines Profilelements zum Abdichten einer Bauwerksfuge die folgenden Schritte:
a) Bereitstellen einer Folie,
b) Aufbringen eines fließfähigen Reaktionsgemisches auf einer Oberseite der Folie,
c) Verbinden eines ersten Seitenkantenbereichs der Folie mit einem zweiten Seitenkantenbereich der Folie zum Erzeugen eines im Wesentlichen zylindrischen Profilelements mittels einer Schweißanlage,
d) Aufschäumen des fließfähigen Reaktionsgemisches durch Führung des entstandenen schlauchartigen Profilelements mittels Fördertechnik (9) über eine Reaktionsstrecke (8), wobei
das Volumen des aufzubringenden fließfähigen Reaktionsgemisches so dosiert wird, dass es im ausreagierten Zustand dem Innenvolumen des hergestellten Profilelements entspricht und wobei die Folie das Reaktionsgemisch vollständig umschließt.

Ferner umfasst das erfindungsgemäße Verfahren bevorzugt die Schritte:
e) Formgebung der gewünschten Profilgeometrie, und
f) Zuschneiden der gewünschten Länge des Profilelements.

Erfindungsgemäß erfolgt in einem ersten Schritt des Verfahrens das Bereitstellen einer Folie mittels einer Zuführungsvorrichtung, die mindestens eine Rolle umfasst, worüber die Folie aus einem Folienvorrat einer rotierenden Walze zur Perforation zugeführt wird.

Zweckmäßig bestehen die bereitgestellten Folien aus Kunststoff. Das Material der Folie ist bevorzugt ein Kunststoffmaterial, das keine Haftverbindungen mit dem Schaumsystem eingeht und die Schaumdrücke ohne zusätzliche Stützform aushält. Alternativ kann bei Verwendung von anderen Folien aus z. B. Papier oder Gewebe, das Aufschäumen in der Folienhülle auch in einer Stützform erfolgen, welche die Außenkontur der sich während des Schäumvorgangs aufweitenden Folie bestimmt.

Im erfindungsgemäßen Verfahren wird die Folie vorzugsweise als eine perforierte Folie bereitgestellt. Geeignet Folienmaterialien sind unter anderem Polymere, wie z. B. Silikon, Polyethylen, Polypropylen, Polyurethan, Polyvinylchlorid, Kautschuk und/oder Gemische davon. Bevorzugt wird die Folie als eine Polyethylenfolie bereitgestellt. In einer besonders bevorzugten Ausführungsform der Folie ist die Folie eine perforierte Polyethylenfolie.

Perforation der Folie erfolgt mittels einer rotierenden Walze oder anderen Mitteln, die zur Erzeugung einer Perforation geeignet sind. Die Perforation der Folie erfolgt mittels einer rotierenden Walze mit aufgebrachten Nadeln. Alternativ kann die Perforation auch durch Schlitz- und Lochstanzen erfolgen. Die Perforation ermöglicht den Austritt von im Folienschlauch eingeschlossener Umgebungsluft und entstehenden Reaktionsgasen während der Aufschäumreaktion des fließfähigen Reaktionsgemisches und verhindert so Gaseinschlüsse, die Blasenbildung innerhalb des Profilelements bzw. unter der Folie hervorrufen können. Durch die Perforation und damit der Möglichkeit des Gasentweichens wird eine gleichmäßige Formgebung sichergestellt.

In einem nächsten Schritt des erfindungsgemäßen Verfahrens wird die Folie flach aufgelegt auf ein Fördermittel gelegt, vorzugsweise ein Förderband oder Laufband, und über eine Formschulter geleitet, wo die Seitenkantenbereiche der Folie leicht aufgestellt werden, um in einem nächsten Schritt das fließfähige Reaktionsgemisch aufzubringen.

Erfindungsgemäß wird im Verfahren ein verformbares fließfähiges Reaktionsgemisch eingesetzt. Das Material kann dabei entweder plastisch oder elastisch verformbar sein. Bevorzugt ist das verformbare fließfähige Reaktionsgemisch ein Polyethylen-, ein Polyurethan-, oder ein Zellkautschukgemisch. Insbesondere besteht das fertig gestellte Profilelement aus einem nach Kompression rückstellfähigen Material, wie beispielsweise Schaumstoff, Moosgummi, Zellkautschuk oder dergleichen. Als Schaumstoffmaterial sind übliche Schaumstoffe, wie Polyethylen- und Polyurethanschaumstoff oder Zellkautschuk, zu nennen. Der Schaumstoff kann dabei ein offenzelliger Schaumstoff mit sehr geringem Luftdurchtrittswiderstand sein, ebenso ein nahezu geschlossenzelliger Schaumstoff mit extrem geringen Luftdurchtrittswerten. Auch Schaumstoffe mit Luftdurchtrittswerten, die zwischen den beiden oben genannten Extremfällen liegen, können im Rahmen der vorliegenden Erfindung verwendet werden. Bevorzugt ist, dass das fließfähige Reaktionsgemisch ein Polyurethangemisch ist.

Es hat sich als vorteilhaft erwiesen, wenn das nach dem erfindungsgemäßen Verfahren hergestellte Profilelement aus einem langsam abbrennenden Schaumstoff, wie beispielsweise Zellkautschuk oder Polyurethanschaum, besteht, der mit einer Folie ummantelt ist. Bei einem langsam abbrennenden Schaumstoff besteht keine Möglichkeit der Brandausbreitung durch den Schaumstoff. Eine Eigenentflammung ist bei den oben genannten Schaumstoffausgangsmaterialien ausgeschlossen. Vorteilhaft ist, dass im Brandfall auch kein Abtropfen erfolgt. Ein langsam abbrennender Schaumstoff sollte in einem Temperaturbereich zwischen 500°C bis 800°C noch mindestens 20%, noch mindestens 25%, vorzugsweise noch mindestens 30%, zwischen 20% bis 60%, zwischen 20% bis 40%, vorzugsweise zwischen 25% bis 30%, seines Ausgangsvolumens besitzen. Ferner sollte ein langsam abbrennender Schaumstoff in einem Temperaturbereich zwischen 500°C bis 800°C noch mindestens 10%, mindestens 20%, vorzugsweise noch mindestens 30%, zwischen 10% bis 40%, zwischen 10% bis 30%, vorzugsweise zwischen 15% bis 20%, seiner Ausgangsmasse besitzen.

Ferner kann das verformbare fließfähige Reaktionsgemisch, sofern Brandschutzeigenschaften, wie beispielsweise Intumeszenz, gewünscht sind, entsprechende Additive enthalten. Unter Einwirkung von Hitze, wie im Brandfall, bläht sich das Material auf und bildet eine isolierende Schicht aus schwerentflammbarem Material. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen, gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

In einer bevorzugten Ausführungsform des Verfahrens der vorliegenden Erfindung ist das fließfähige Reaktionsgemisch ein intumeszierendes Polyurethangemisch.

Das fließfähige Reaktionsgemisch kann zum Beispiel in einem vorgeschalteten Mischverfahren gemischt werden, z. B. schon in einer Anlage, die zum Aufbringen des fließfähigen Reaktionsgemisches geeignet ist, wie eine Gießanlage.

Erfindungsgemäß erfolgt das Aufbringen des fließfähigen Reaktionsgemisches durch gleichmäßiges orthogonales Dosieren zu einer Oberseite der Folie. Insbesondere ist bei der erfindungsgemäßen Herstellung des Profilelements erforderlich, dass das fließfähige Reaktionsgemisch gleichmäßig orthogonal zu der Oberseite der offenen, flachen Folie dosiert wird. Dadurch wird auftretender Rückstau der Materialmasse in einem schon vorgefertigten Schlauch während des Herstellungsverfahrens oder ungenügend Materialmasse in der hergestellten Fugenschnur verhindert. Bevorzugt wird das Volumen des aufzubringenden fließfähigen Reaktionsgemisches so dosiert, dass es im ausreagierten Zustand dem Innenvolumen des hergestellten Profilelements entspricht.

Die befüllte Folie wird anschließend mittels Fördertechnik zu einer Schweißanlage geführt, wo ein erster Seitenbereich der Folie mit einem zweiten Seitenkantenbereich der Folie zum Erzeugen eines im Wesentlichen zylindrischen Profilelements verbunden wird. Vorzugsweise erfolgt der Schritt des Verbindens durch thermisches Schweißen unter Ausbildung einer Fischflossenschweißnaht. Die Folie sollte dabei das Reaktionsgemisch vollständig umschließen.

Dieses so entstandene schlauchartige Profilelement wird anschließend mittels Fördertechnik über eine Reaktionsstrecke geführt, in der das Aufschäumen des fließfähigen Reaktionsgemisches erfolgt. Vorzugsweise erfolgt das Aufschäumen des fließfähigen Reaktionsgemisches in einem Zeitraum von 15 bis 90 Sekunden. Das Aufschäumen findet zwischen der thermischen Schweißanlage und einer Schneideeinheit statt. In einer besonderen Ausführungsform des Verfahrens der vorliegenden Erfindung umfasst die Fördertechnik ein Förderband oder Laufband mit Führungselementen, z. B. Noppen oder Vertiefungen, zum exakten Führen der Folie. Während des Führens über die Reaktionsstrecke kann gegebenenfalls eine Formgebung der gewünschten Profilgeometrie erfolgen. Die gewünschte Profilgeometrie wird durch mindestens ein Metallprofil < geformt. Anschließend wird das fertige Profilelement zu einer Schneideeinheit geführt, wo das Zuschneiden der gewünschten Länge des Profilelements erfolgt.

Das erfindungsgemäße Verfahren ermöglicht so eine kostengünstige, ökonomische, kontinuierliche und endlose Herstellung von Profilelementen. Das erfindungsgemäße Verfahren wird vorzugweise mittels einer Vorrichtung zur Herstellung derartiger Profilelemente durchgeführt.

Eine solche Vorrichtung zur Herstellung derartiger Profilelemente weist eine Gießanlage zum Mischen und Aufbringen eines fließfähigen Reaktionsgemisches auf und ist gekennzeichnet durch
a) eine Zuführungsvorrichtung zur Zuführung einer Folie,
b) eine Walze zur Perforation der Folie,
c) mindestens ein Fördermittel zur flachen Auflage und Beförderung der Folie,
d) eine Formschulter zur Formgebung des Profilelements,
e) eine thermische Schweißanlage zum Verbinden eines ersten Seitenkantenbereichs der Folie mit einem zweiten Seitenkantenbereich der Folie,
f) eine Reaktionsstrecke zum Aufschäumen des fließfähigen Reaktionsgemisches,
g) Fördertechnik zum exakten Führen der Folie,
h) eine Schneideeinheit zum Zuschneiden der gewünschten Länge des Profilelements, und
i) mindestens ein Metallprofil zur Formgebung der gewünschten Profilgeometrie.

Vorzugsweise umfasst die Zuführungsvorrichtung zur Zuführung der Folie mindestens eine Rolle. Weiter bevorzugt umfasst die Fördertechnik zum exakten Führen der Folie ein Förderband oder Laufband mit Führungselementen, z. B. Noppen oder Vertiefungen. Vorzugsweise wird dem Metallprofil zur Formgebung der gewünschten Profilgeometrie jede gewünschte Form gegeben und somit die Profilgeometrie des Profilelements vorbestimmt.

Von besonderer praktischer Bedeutung ist eine besondere Ausgestaltung des erfindungsgemäß hergestellten Profilelements zur Abdichtung einer Fuge zwischen einem ersten Bauteil und einem zweiten Bauteil, wobei das Profilelement ein langgestrecktes Verbindungselement und mindestens zwei Dichtbereiche umfasst, die beabstandet nebeneinander in Verbindungselementlängsrichtung verlaufend an dem Verbindungselement am äußeren Rand positioniert sind. Vorzugsweise wird das erfindungsgemäß hergestellte Profilelement für die akustische, rauchsichere und/oder brandsichere Abdichtung von Anschlussfugen bei Trockenbauwänden verwendet. Dabei ist besonders bevorzugt, dass das Profilelement im oberen Bereich der Anschlussfuge positioniert und dazu konfiguriert ist, die Fuge von außen abzudichten.

Bevorzugte Querschnittsformen der Dichtbereiche des erfindungsgemäß hergestellten Profilelements sind Rundprofil und Mehreckprofil, insbesondere Rechteckprofil, Quadratprofil, Parallelogrammprofil und Dreieckprofil. Besonders bevorzugt ist Rundprofil. Es sind jedoch auch andere oder gemischte Profilgeometrien denkbar und möglich, solange die Dichtbereiche nach der Installation des Profilelements an die beiden Bauteile angrenzen und die zwischen den Bauteilen bestehende Fuge verschließen können.

Die Dimension und Profilgeometrie sowie die Materialien des erfindungsgemäß hergestellten Profilelements werden entsprechend der geplanten Verwendung des Profilelements gewählt.

Im Allgemeinen wird die Dimension des erfindungsgemäß hergestellten Profilelements in Abhängigkeit der verwendeten Profile und des verwendeten Materials gewählt. Die Dimension muss so gewählt werden, dass das Profilelement den Spalt zwischen der Gipskartonplatte und der Decke ausfüllt und abdichtend sowohl an der Decke als auch an der Gipskartonplatte anliegt. Soll eine vertikale Bewegung der Gipskartonplatten zugelassen werden, muss das Profilelement, insbesondere die Dichtbereiche der Bewegung der Gipskartonplatte folgen, damit der Kontakt mit der Gipskartonplatte nicht abreißt und keine Lücke zwischen Dichtbereich und Gipskartonplatte entstehen kann. Hierzu besteht das erfindungsgemäß hergestellte Profilelement aus rückstellfähigem und komprimierbarem Material, wie Polyurethanschaum, und wird bei der Montage der Gipskartonplatten entsprechend vorkomprimiert, damit einer Abwärtsbewegung der Gipskartonplatte, wodurch der Spalt zwischen dieser und der Decke vergrößert wird, gefolgt werden kann. Die voreingestellte Bewegungsfreiheit der Gipskartonplatte bestimmt somit die Dimension des Profilelements.

Der Bereich des Verbindungselements, der zwischen den beiden Dichtbereichen, liegt, definiert einen Auflagebereich, der nur aus dem Verbindungselement besteht. Der Auflagebereich wird dabei so dimensioniert, dass dieser mindestens der Breite des Steges des U-Profils entspricht. Hierdurch werden die Installation und insbesondere die Positionierung des Profilelements auf dem Steg des U-Profils erleichtert.

Die Positionierung des Profilelements an einem Bauteil kann in einem Schritt erfolgen. Es ist auch möglich, dass das Profilelement seinerseits Mittel zur Befestigung an einem Bauteil, wie einem Trockenbauprofil, aufweist, beispielsweise in Form einer Selbstklebeschicht, in Form von form- oder kraftschlüssig wirkenden Mitteln, wie geeignete Profilierungen, oder dergleichen. Das erfindungsgemäß hergestellte Profilelement wird vorzugsweise in einem Schritt an ein Bauteil positioniert.

Die Verwendung eines erfindungsgemäß hergestellten Profilelements umfasst die Positionierung vor der Anbringung eines ersten Bauteils auf dem ersten Bauteil, und dann gemeinsames Befestigen mit diesem an einem zweiten Bauteil in üblicher Weise, z.B. durch Schrauben oder Nageln. Vorzugsweise ist das erste Bauteil ein Rahmenprofil eines Trockenbauständerwerks, etwa ein U-Profil, und das zweite Bauteil eine Wand, eine Decke oder ein Boden eines Bauwerks. Besonders bevorzugt ist das erste Bauteil ein U-Profil, und das zweite Bauteil eine Decke. Mit dieser Anordnung ist das Profilelement im äußeren Bereich der Fuge, insbesondere der Anschlussfuge positioniert und dazu konfiguriert, die Fuge von außen abzudichten.

Bei der Verwendung des erfindungsgemäß hergestellten Profilelements auf dem U-Profil und auf Stoß mit der Decke können Unebenheiten in beiden Bauteilen ausgeglichen werden und eine einfache Positionierung ohne Verklebung ist möglich. Ferner kann durch die anschließende Positionierung der Gipskartonplatte sowie durch die Auswahl des Dichtmaterials und/oder Geometriegestaltung des Profilelements der Fugenabstand kontrolliert werden.

Das erfindungsgemäß hergestellte Profilelement lässt sich auf alle Arten von Anschlussfugen anwenden, bei denen ein Bauteil auf ein anderes Bauteil trifft. Dementsprechend lässt sich das Profilelement auf alle Profile, auch geschlossene Profile oder Holzbalken, anwenden, die zu einer Anschlussfläche abgedichtet werden müssen.

Eine besonders bevorzugte Verwendung des erfindungsgemäß hergestellten Profilelements betrifft somit die Abdichtung der Profile im Trockenbau, wobei das erste Bauteil ein Boden, eine Decke oder eine Wand eines Bauelements, beispielsweise ein Mauerwerk oder Betonbauelement, ist und das zweite Bauteil ein Decken-, Boden- oder Wandprofil oder ein Metall- oder Holzständerwerk eines Trockenbauelements ist. Bei dem Profil kann es sich um irgendeines der üblicherweise verwendeten Profile für den Trockenbau handeln, unabhängig davon, ob es einen geschlitzten oder ungeschlitzten Steg bzw. geschlitzte oder ungeschlitzte Flansche aufweist. Die weiteren Bauteile sind Gipskartonplatten, die eng an die Profile anliegen und am Ständerwerk befestigt werden. Um eine vertikale Bewegung der Gipskartonplatten, etwa im Falle eines Erdbebens, zuzulassen, werden die Gipskartonplatten auf Abstand zu einer Wand, einem Boden oder einer Decke, vertikal beweglich montiert. Dadurch entsteht eine Lücke (hierin auch Fuge genannt) zwischen der Gipskartonplatte und der Wand, dem Boden oder der Decke. Diese Fuge wird durch das Profilelement ausgefüllt, so dass das Profilelement die Fuge gegen Schall und/oder Rauch und je nach Material gegebenenfalls auch gegen Feuer abdichtet.

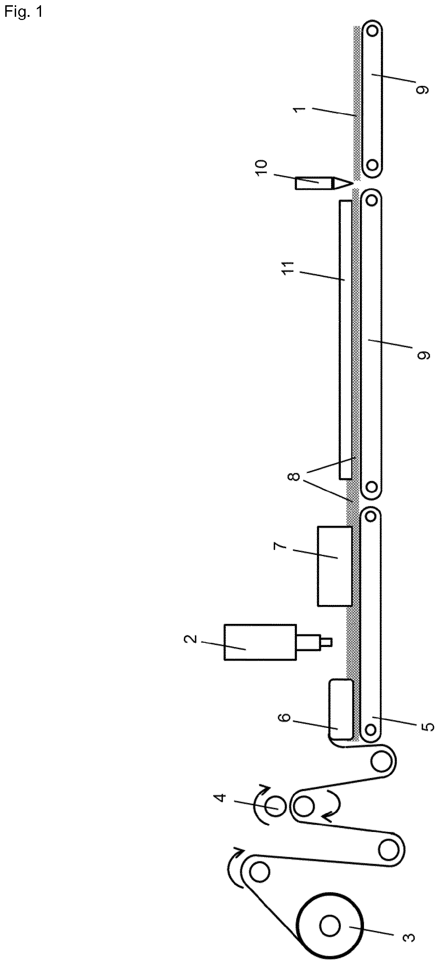

Ohne den Schutzumfang der Erfindung einzuschränken, wird die Erfindung anhand der Herstellung eines erfindungsmäßen Profilelements mittels einer Vorrichtung, die in Figur 1 schematisch dargestellt ist, näher beschrieben.

Bei der in Figur 1 dargestellten Vorrichtung zur Herstellung eines Profilelements 1 wird eine Polyethylenfolie, von einem Folienvorrat 3 mittels einer Zuführungsvorrichtung über mindestens eine Walze 4 geführt, wo die Perforation erfolgt. Die Perforation wird durch eine rotierende Walze 4 mit aufgebrachten Nadeln durchgeführt. Die Folie wird dann flach auf ein Fördermittel 5 aufgelegt und über eine Formschulter 6 geleitet, wo die Seitenkantenbereiche der Folie aufgestellt werden, um ein fließfähiges intumeszierendes Polyurethan-Material aufzubringen. Das fließfähige Polyurethan-Material wird mittels einer Gießanlage 2 gemischt und auf die Folie durch gleichmäßiges orthogonales Dosieren zu der Oberseite der Folie aufgebracht. Die Folie wird anschließend mittels Fördermittel 5 zu einer thermischen Schweißanlage 7 geführt, wo ein erster Seitenbereich der Folie mit einem zweiten Seitenkantenbereich der Folie durch thermisches Schweißen unter Ausbildung einer Fischflossenschweißnaht verbunden wird. Dieses so entstandene schlauchartige Profilelement wird im folgendem mittels Fördertechnik 9 über eine Reaktionsstrecke 8 geführt, in der das Aufschäumen des Polyurethan-Materials erfolgt. Durch mindestens ein Metallprofil 11 wird die gewünschte Profilgeometrie geformt. Anschließend wird das fertige Profilelement 1 zu einer Schneideeinheit 10 geführt, wo das Zuschneiden der gewünschten Länge des Profilelements 1 erfolgt.

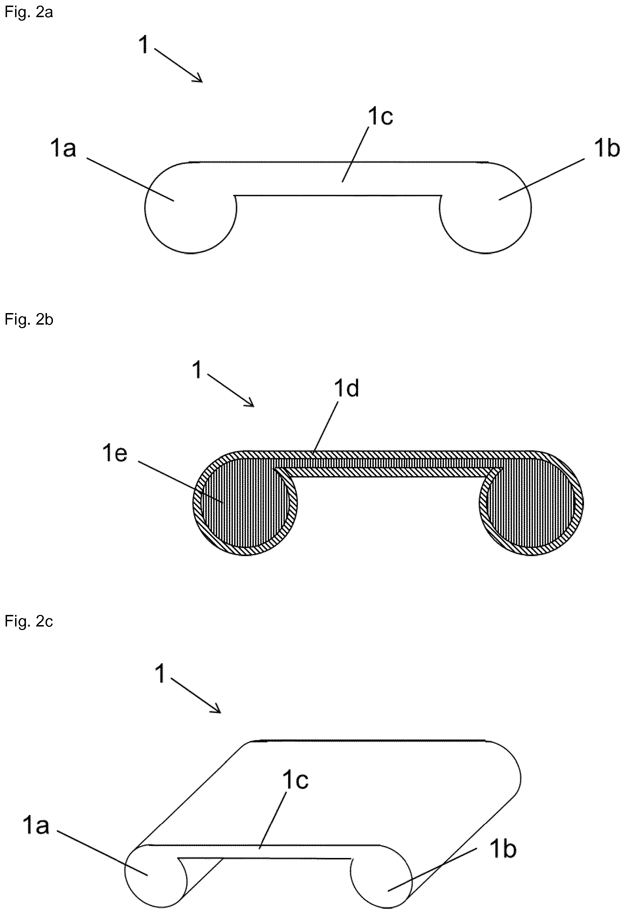

In Figuren **2a** bis **2c** ist eine bevorzugte Ausführungsform eines erfindungsgemäß hergestellten Profilelements 1 gezeigt. Das Profilelement 1 weist zwei Dichtbereiche 1a und 1b auf, die an den äußeren Rändern des Verbindungselements 1c positioniert sind. Die Dichtbereiche 1a und 1b weisen ein Rundprofil und ein Vollprofil auf, das Verbindungselement 1c ein Vollprofil. Die Dichtbereiche 1a und 1b und das Verbindungselement 1c bestehen aus einem komprimierbaren Polyurethan-Schaumstoff (1e), der gegebenenfalls Brandschutzadditive enthält. Die Polyethylenfolie 1d umschließt den Polyurethan-Schaumstoff vollständig.

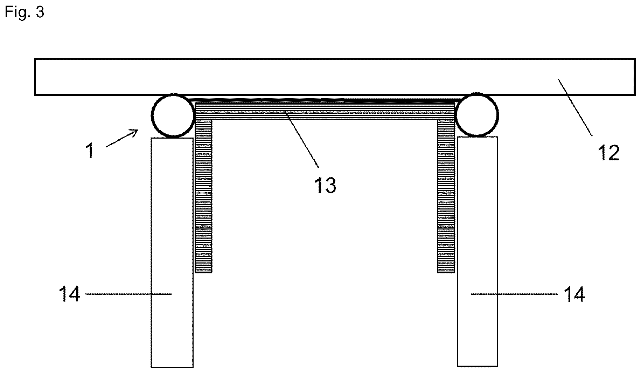

In Figur **3** skizziert die Anwendung der Ausführungsform eines erfindungsgemäß hergestellten Profilelements, dargestellt in Fig. 2a bis 2b, für die akustische, rauchsichere und/oder brandsichere Abdichtung von Anschlussfugen bei Trockenbauwänden. Zur Abdichtung des Spalts zwischen einer Decke 12, dem U-Profil 13 eines Trockenbauständerwerks und den Gipskartonplatten 14 wird in dem ersten Schritt das Profilelement 1 auf den Steg des U-Profils 13 gelegt und zusammen mit diesem in dem zweiten Schritt an der Decke 12 in üblicher Weise, z.B. durch Schrauben oder Nageln, befestigt. Dann werden in einem letzten Schritt die Gipskartonplatten 14 an die Flansche des U-Profils 13 angelegt, nach oben Richtung Decke 12 geschoben, wobei ein Spalt zwischen der Oberkante der Gipskartonplatte 14 und der Decke 12 verbleibt, der mit den Dichtbereichen 1a und 1b des Profilelements 1 ausgefüllt ist, um etwa eine vertikale Bewegung der Gipskartonplatte 14 zuzulassen. Dadurch werden die Dichtbereiche 1a und 1b zusammengedrückt und dichten so den Spalt zwischen der Decke 12 und dem U-Profil 13 und den Spalt zwischen der Decke 12 und der Gipskartonplatte 14 ab. Das Profilelement 1 ist so im oberen Bereich der Anschlussfuge positioniert und dazu konfiguriert, die Fuge von außen abzudichten.

Wie aus dem oben Ausgeführten ersichtlich wird, eignet sich das erfindungsgemäße Verfahren besonders dazu, in kostengünstiger, ökonomischer, kontinuierlicher und endloser Weise ein Profilelement für die akustische, rauchsichere und/oder brandsichere Abdichtung von Anschlussfugen bei Trockenbauwänden vor allem von Bewegungsfugen, herzustellen.

Das erfindungsgemäße Verfahren und die erfindungsgemäße Vorrichtung zeichnen sich besonders durch folgende Vorteile gegenüber Systemen des Standes der Technik aus:
Durch das gleichmäßige orthogonale Dosieren zu der Oberfläche der Folie, tritt kein Verschmutzen von möglichen Prozesszuleitungen auf, da der Schaum nur mit der Folie in Berührung kommt und nicht mit weiteren Vorrichtungsbestandteilen. Weiterhin ermöglicht die Vorrichtung ein schnelles Rüsten auf andere Dimensionen und Durchmesser des gewünschten Profilelements, z. B. durch Wechseln der Formschulter und Einstellen der Folienbreite sowie der gewünschte Länge des Profilelements, ohne aufwendiges Rüsten. Das erfindungsgemäße Verfahren und die Vorrichtung ermöglicht die Herstellung von Profilelementen mit einem Durchmesser von ca. 25 mm bis ca. 70 mm und einer Länge bis zu 5 m.

Durch den flexiblen Einsatz mehrere Metallprofile, kann eine freie Profilgeometriegestaltung, je nach gewünschtem Einsatzgebiet, erfolgen. Die Folie des erfindungsgemäß hergestellten Profilelements dient gleichzeitig als Montagehilfe, d .h. weitere Montagehilfsmittel sind nicht notwendig, und wird vor Verwendung nicht entfernt. Dies hat weiterhin den Vorteil, dass das Profilelement schnell montiert werden kann, dass der Schaum vor Spritzwasser und beim Einbringen geschützt wird.

Darüber hinaus verhindert das erfindungsgemäße Verfahren und die Vorrichtung einen auftretender Rückstau der Materialmasse in einem schon vorgefertigten Schlauch während des Herstellungsverfahrens oder ungenügend Materialmasse in der hergestellten Fugenschnur. Weiter wird auch die Durchmischungsqualität/Homogenität des Schaums durch die Formgebung nicht beeinflusst.

Wie aus dem oben Ausgeführten auch ersichtlich wird, eignet sich das erfindungsgemäß hergestellte Profilelement besonders dazu, in einfacher Weise eine Bauwerksfuge zwischen zwei aneinandergrenzenden Bauteilen sicher abzudichten, insbesondere gegen Schall und/oder Rauch und gegebenenfalls auch gegen Feuer.

Ferner ist die Anwendung sehr montagefreundlich, da keine zusätzliche Befestigung des Profilelements etwa an dem Profil oder an der Decke notwendig ist. Ein passgenaues Anlegen des Profilelements etwa an ein Profil ist aufgrund der Selbstzentrierung des Profilelements bei der Montage des Profils an einem Bauteil ebenfalls nicht notwendig. Die Montage ist daher denkbar einfach und der Arbeitsaufwand zur Montage des Profilelements ist deutlich reduziert. Mit dem erfindungsgemäß hergestellten Profilelement wird daher eine sichere und zuverlässige Abdichtung von Fugen zwischen zwei Bauteilen, insbesondere zwischen einem Profil eines Trockenbauständerwerks und einem daran angrenzenden Bauteil, wie etwa eine Decke, Wand oder ein Boden, erreicht. Dabei kann eine beidseitige Abdichtung in nur einem Arbeitsgang erreicht werden, indem ein vorgefertigtes Profilelement bereitgestellt wird.

Weiterhin hat sich gezeigt, dass mit dem erfindungsgemäß hergestellten Profilelement hervorragende Dichtigkeiten erzielt werden können, da eine gute Komprimierbarkeit der Dichtbereiche durch Auswahl der Dichtmaterialien und/oder Geometriegestaltung ohne zusätzliche Hilfsmittel gewährleistet ist. Die erfindungsgemäß hergestellten Profilelemente ermöglichen es auch, den richtigen Abstand von Gipskartonplatte zu dem Anschlussbauteil ohne zusätzliche Hilfsmittel einzustellen, um besagte Vorkomprimierung zu erreichen.

Mit dem erfindungsgemäß hergestellten Profilelement kann auch sichergestellt werden, dass bereits durch die Auswahl der Dichtmaterialien und/oder Geometriegestaltung genügend Material installiert wird, um eine hervorragende Dichtigkeit bei maximaler Bewegungsaufnahme zu gewährleisten.

Mit dem erfindungsgemäß hergestellten Profilelement können ferner Unebenheiten einer Bauteiloberfläche bereits beim Anordnen eines Bauteils an ein anderes Bauteil sicher abgedichtet werden, da die Dichtelemente des Fugendichtbandes ausreichend fest an die Oberfläche des einen Bauteils und gleichzeitig an die Seitenflächen des anderen Bauteils angepresst werden.

In Anbetracht des Vorstehenden ist ersichtlich, dass die Aufgaben der Erfindung gelöst werden. Da verschiedene Änderungen an den oben beschriebenen Verfahren und Vorrichtung, gemacht werden können, ohne vom Umfang der beigefügten Ansprüche abzuweichen, ist es beabsichtigt, dass alle in der obigen Beschreibung enthaltenen Gegenstände als illustrativ und nicht in einem einschränkenden Sinne interpretiert werden.

## Patentansprüche

1. Verfahren zur Herstellung eines Profilelements (1) zum Abdichten einer Bauwerksfuge, umfassend die folgenden Schritte:
a) Bereitstellen einer Folie mittels einer Zuführvorrichtung, die mindestens eine Rolle umfasst, worüber die Folie aus einem Folienvorrat einer rotierenden Walze zur Perforation zugeführt wird,
b) Aufbringen eines fließfähigen Reaktionsgemisches auf einer Oberseite der Folie,
c) Verbinden eines ersten Seitenkantenbereichs der Folie mit einem zweiten Seitenkantenbereich der Folie zum Erzeugen eines im Wesentlichen zylindrischen Profilelements mittels einer Schweißanlage,
d) Aufschäumen des fließfähigen Reaktionsgemisches durch Führung des entstandenen schlauchartigen Profilelements mittels Fördertechnik (9) über eine Reaktionsstrecke (8),
e) Formgebung der gewünschten Profilgeometrie durch mindestens ein Metallprofil (11), wobei das Volumen des aufzubringenden fließfähigen Reaktionsgemisches so dosiert wird, dass es im ausreagierten Zustand dem Innenvolumen des hergestellten Profilelements entspricht und wobei die Folie das Reaktionsgemisch vollständig umschließt.

2. Verfahren nach Anspruch 1 ferner umfassend die folgenden Schritte:
f) Zuschneiden der gewünschten Länge des Profilelements.

3. Verfahren nach Anspruch 1 oder 2, wobei Schritt b) gleichmäßiges orthogonales Dosieren des fließfähigen Reaktionsgemisches zu der Oberseite der Folie umfasst.

4. Verfahren nach einem der vorhergehenden Ansprüche, wobei Schritt c) das Verbinden mittels thermischen Schweißens umfasst.

5. Verfahren nach einem der vorhergehenden Ansprüche, wobei die Folie aus Polyethylen besteht und perforiert ist.

6. Verfahren nach einem der vorhergehenden Ansprüche, wobei das fließfähige Reaktionsgemisch ein Polyurethangemisch ist.

7. Verfahren nach Anspruch 6, wobei das Polyurethangemisch ein intumeszierendes Polyurethangemisch ist.

8. Verfahren nach einem der vorhergehenden Ansprüche, wobei das Profilelement (1) ein langgestrecktes Verbindungselement und mindestens zwei Dichtbereiche umfasst, die beabstandet nebeneinander in Verbindungselementlängsrichtung verlaufend an dem Verbindungselement am äußeren Rand positioniert sind.

9. Verfahren nach einem der Ansprüche 2 bis 8, wobei Schritt d) in einem Zeitraum von 15 bis 90 Sekunden erfolgt.

10. Verfahren nach einem der vorhergehenden Ansprüche, wobei das Verfahren ein kontinuierliches und endloses Verfahren ist.

11. Vorrichtung zur Herstellung eines Profilelements, zum Abdichten einer Bauwerksfuge, mit einer Gießanlage (2) zum Mischen und Aufbringen eines fließfähigen Reaktionsgemisches, **gekennzeichnet durch**
a) eine Zuführungsvorrichtung zur Zuführung einer Folie,
b) eine Walze (4) zur Perforation der Folie,
c) mindestens ein Fördermittel (5) zur flachen Auflage und Beförderung der Folie,
d) eine Formschulter (6) zur Formgebung des Profilelements,
e) eine thermische Schweißanlage (7) zum Verbinden eines ersten Seitenkantenbereichs der Folie mit einem zweiten Seitenkantenbereich der Folie,
f) eine Reaktionsstrecke (8) zum Aufschäumen des fließfähigen Reaktionsgemisches,
g) Fördertechnik (9) zum exakten Führen der Folie,
h) eine Schneideeinheit (10) zum Zuschneiden der gewünschten Länge des Profilelements, und
i) mindestens ein Metallprofil (11) zur Formgebung der gewünschten Profilgeometrie.

12. Vorrichtung nach Anspruch 11, wobei die Zuführungsvorrichtung zur Zuführung der Folie mindestens eine Rolle umfasst.

13. Vorrichtung nach Anspruch 11 oder 12, wobei die Fördertechnik zum exakten Führen der Folie ein Förderband mit Führungselementen umfasst.

## Claims

1. Method for producing a profiled element (1) for sealing a structural joint, comprising the following steps:
a) providing a film by means of a feed device which comprises at least one roll, by means of which the film is fed from a film supply to a rotating roller for perforation;
b) applying a flowable reaction mixture to an upper face of the film;
c) connecting a first side edge region of the film to a second side edge region of the film to create a substantially cylindrical profiled element by means of a welding system;
d) foaming the flowable reaction mixture by guiding the resulting tubular profiled element over a reaction path (8) by means of conveyor equipment (9);
e) shaping the desired profile geometry by at least one metal profile (11), wherein the volume of the flowable reaction mixture to be applied is metered such that, in the fully reacted state, said volume corresponds to the inner volume of the profiled element produced, and wherein the film completely encloses the reaction mixture.

2. Method according to claim 1, further comprising the following steps:
f) cutting the profiled element to the desired length.

3. Method according to either claim 1 or claim 2, wherein step b) comprises uniformly orthogonally metering the flowable reaction mixture onto the upper face of the film.

4. Method according to any of the preceding claims, wherein step c) comprises connection by means of thermal welding.

5. Method according to any of the preceding claims, wherein the film consists of polyethylene and is perforated.

6. Method according to any of the preceding claims, wherein the flowable reaction mixture is a polyurethane mixture.

7. Method according to claim 6, wherein the polyurethane mixture is an intumescent polyurethane mixture.

8. Method according to any of the preceding claims, wherein the profiled element (1) comprises an elongate connection element and at least two sealing regions which are positioned on the outer edge of the connection element so as to be spaced apart next to one another and so as to extend in the longitudinal direction of the connection element.

9. Method according to any of claims 2 to 8, wherein step d) takes place in a period of 15 to 90 seconds.

10. Method according to any of the preceding claims, wherein the method is a continuous and endless method.

11. Device for producing a profiled element for sealing a structural joint, having a pouring system (2) for mixing and applying a flowable reaction mixture, **characterized by**:
a) a feed device for feeding a film;
b) a roller (4) for perforating the film;
c) at least one conveying means (5) for supporting the film in a planar manner and conveying the film;
d) a shaping shoulder (6) for shaping the profiled element;
e) a thermal welding system (7) for connecting a first side edge region of the film to a second side edge region of the film;
f) a reaction path (8) for foaming the flowable reaction mixture;
g) conveyor equipment (9) for accurately guiding the film;
h) a cutting unit (10) for cutting the profiled element to the desired length; and
i) at least one metal profile (11) for shaping the desired profile geometry.

12. Device according to claim 11, wherein the feed device comprises at least one roll for feeding the film.

13. Device according to either claim 11 or claim 12, wherein the conveyor equipment comprises a conveyor belt having guide elements for accurately guiding the film.

## Revendications

1. Procédé de production d'un élément profilé (1) destiné à assurer l'étanchéité d'un joint de construction, comprenant les étapes suivantes :
a) mise à disposition d'un film au moyen d'un dispositif d'alimentation qui comprend au moins un rouleau, par l'intermédiaire duquel le film est alimenté depuis une réserve de film vers un cylindre rotatif destiné à la perforation,
b) application d'un mélange réactionnel coulant sur une face supérieure du film,
c) liaison d'une première zone de bord latéral du film à une seconde zone de bord latéral du film pour produire un élément profilé sensiblement cylindrique au moyen d'un système de soudage,
d) moussage du mélange réactionnel coulant par guidage de l'élément profilé tubulaire résultant au moyen d'une technique de transport (9) sur une section de réaction (8),
e) formage de la géométrie de profilé souhaitée par au moins un profilé métallique (11), le volume du mélange réactionnel coulant à appliquer étant dosé de telle manière qu'au terme de sa réaction, il corresponde au volume intérieur de l'élément profilé produit, et le film entourant complètement le mélange réactionnel.

2. Procédé selon la revendication 1, comprenant en outre les étapes suivantes :
f) découpe de la longueur souhaitée de l'élément profilé.

3. Procédé selon la revendication 1 ou 2, dans lequel l'étape b) comprend un dosage uniforme orthogonal du mélange réactionnel coulant sur la face supérieure du film.

4. Procédé selon l'une des revendications précédentes, dans lequel l'étape c) comprend la liaison par soudage thermique.

5. Procédé selon l'une des revendications précédentes, dans lequel le film est constitué de polyéthylène et est perforé.

6. Procédé selon l'une des revendications précédentes, dans lequel le mélange réactionnel coulant est un mélange de polyuréthane.

7. Procédé selon la revendication 6, dans lequel le mélange de polyuréthane est un mélange de polyuréthane intumescent.

8. Procédé selon l'une des revendications précédentes, dans lequel l'élément profilé (1) comprend un élément de liaison allongé et au moins deux zones d'étanchéité, lesquelles sont positionnées de façon espacée l'une à côté de l'autre sur l'élément de liaison au niveau du bord extérieur en s'étendant dans la direction longitudinale de l'élément de liaison.

9. Procédé selon l'une des revendications 2 à 8, dans lequel l'étape d) est effectuée sur une durée de 15 à 90 secondes.

10. Procédé selon l'une des revendications précédentes, le procédé étant un procédé continu et sans fin.

11. Dispositif de production d'un élément profilé, destiné à assurer l'étanchéité d'un joint de construction, comportant une installation de coulée (2) destinée à mélanger et à appliquer un mélange réactionnel coulant, **caractérisé par**
a) un dispositif d'alimentation destiné à alimenter un film,
b) un cylindre (4) destiné à perforer le film,
c) au moins un moyen de transport (5) destiné à soutenir et à transporter le film à plat,
d) un épaulement de formage (6) destiné à former l'élément profilé,
e) un système de soudage thermique (7) destiné à relier une première zone de bord latéral du film à une seconde zone de bord latéral du film,
f) une section de réaction (8) destinée à faire mousser le mélange réactionnel coulant,
g) une technique de transport (9) destinée au guidage précis du film,
h) une unité de coupe (10) destinée à découper la longueur souhaitée de l'élément profilé, et
i) au moins un profilé métallique (11) destiné à former la géométrie de profilé souhaitée.

12. Dispositif selon la revendication 11, dans lequel le dispositif d'alimentation destiné à alimenter le film comprend au moins un rouleau.

13. Dispositif selon la revendication 11 ou 12, dans lequel la technique de transport destinée au guidage précis du film comprend une bande transporteuse comportant des éléments de guidage.
